Europäisches Patentamt

European Patent Office

Office européen des brevets

(11) Publication number: **0 188 067 B1**

## EUROPEAN PATENT SPECIFICATION

(45) Date of publication of patent specification: **27.05.92**   (51) Int. Cl.⁵: **A23C 19/032**, A23C 19/04

(21) Application number: **85308092.7**

(22) Date of filing: **07.11.85**

(54) Entrainment of exogenous materials in cheese curds.

(30) Priority: **09.01.85 US 689867**

(43) Date of publication of application:
**23.07.86 Bulletin 86/30**

(45) Publication of the grant of the patent:
**27.05.92 Bulletin 92/22**

(84) Designated Contracting States:
**AT BE CH DE FR GB IT LI LU NL SE**

(56) References cited:
**FR-A- 2 056 941**
**US-A- 4 310 554**

**JOURNAL OF DAIRY SCIENCE, vol. 64, no. 4, April 1981, pages 616-621, Champaign, Illinois, US; E.L.MAGEE, Jr. et al.: "Microencapsulation of cheese ripening systems: Production of diacetyl and acetoin in cheese by encapsulated bacterial cell-free extract"**

**DAIRY INDUSTRIES INTERNATIONAL, vol. 5, no. 45, 1980, pages 15,17,20,22,48; B.A.LAW: "Accelerated ripening of cheese"**

(73) Proprietor: **GENENCOR, INC.**
**180 Kimball Way**
**South San Francisco California 94080(US)**

(72) Inventor: **Arbige, Michael Vincent**
**1256 Birch Street**
**Montara California 94037(US)**
Inventor: **Silver, Scott C.**
**2018 Lyon Avenue**
**Belmont California 94002(US)**

(74) Representative: **Smith, Sydney et al**
**Elkington and Fife Prospect House 8 Pembroke Road**
**Sevenoaks, Kent TN13 1XR(GB)**

JOURNAL OF DAIRY SCIENCE, vol. 60, no. 8, 1977, pages 1260-1265; G.J.MOSKOWITZ et al.: "Properties of the esterase produced by Mucor miehei to develop flavor in dairy products"

BIOCHEM. JOURNAL, vol. 115, 1969, pages 183-190; M.L.GREEN et al.: "Studies on the preparation of water-insoluble derivatives of rennin and chymotrypsin and their use in the hydrolysis of casein and the clotting of milk"

Handbuch der Lebensmittelchemie, page 537

Biochemie, Lehninger, page 127

## Description

The present invention relates to a novel process for entraining exogenous materials, such as microbial enzymes, substantially into cheese curds. Exogenous material and material complexes having a particle size equal to or greater than 0.20 microns are preferentially partitioned into the cheese curds, hereinafter microns means $\mu$m.

Background Art

Accelerated ripening of cheese to improve cost efficiency through reduction of storage time is important to the cheese industry. Techniques which are currently being evaluated include elevation of storage temperature, culture modifications, addition of exogenous enzymes and combinations thereof. Accelerated ripening has limited commercial value due to inherent problems in controlling available techniques. For example, the use of elevated temperatures, often results in problems which include microbial spoilage and development of an imbalance flavor profile, i.e., one not representative of the variety of cheese in question.

Exogenous enzyme addition is one route that has been used to accelerate ripening because many cheese varieties in the past have been matured by the action of endogenous enzymes associated with milk microflora. However, a problem with exogenous enzyme addition is that soluble enzymes, added to milk before renneting are evenly distributed. Because curds constitute only a small fraction of the milk volume, the majority of the added enzyme is lost to the much greater volume of whey produced during the cheese making process. Not only is there an uneconomical loss of enzyme, but the resulting whey may be of questionable quality due to excessive fat/protein breakdown from the exogenous enzyme.

Enzymes could be added directly to the curd before pressing by addition to the salt added during pressing or by spraying a liquid enzyme preparation onto the curds. However, post-renneting addition does not allow for the uniform incorporation of enzyme throughout the curd particles.

Furthermore, these methods of distribution are exceedingly difficult to carry out at a factory scale unless special equipment and procedures are employed.

In US-A-4,310,554, there is disclosed a process of entraining exogeneous materials into cheese curds by adding an insoluble exogeneous material which is in the form of microcapsules which may contain enzymes.

In Journal of Dairy Science, Vol. 64, No. 4, pages 616-621, there is also disclosed the use of microencapsulated enzyme systems to accelerate ripening of cheese.

In Dairy Industries International, Vol. 5, No. 45, pages 15, 17, 20, 22 and 48, the accelerated ripening of cheese by the incorporation therein of enzymes is described.

According to the present invention there is provided a process for improving the amount of protease or lipase which is entrained into cheese curds from milk comprising:-

(a) selecting insoluble particles having a size of at least 0.20 microns; said particles consisting essentially of a protease or lipase enzyme from a microbial source;

(b) adding to milk an amount of the selected protease or lipase particles sufficient to achieve the desired entrainment of the particles in the cheese curds; and

(c) forming the curds and whey from the milk of step (b).

Modes of Carrying Out the Invention

Lipase Partitioning

Initial partitioning studies were conducted using exogenous lipases from both microbial and animal sources. The solubility of these lipases was determined by filtering a liquid enzyme mix through a 0.20 micron Millipore® filter. The filtrate was measured for enzymatic activity, which is expressed in Table 1 as a percentage of the initial activity of the filtered mix.

TABLE I

| Solubility of Various Lipase Preparations | |
|---|---|
| SOURCE | % of initial activity recovered in filtrate |
| Aspergillus oryzae (Genencor)* | 0 |
| Aspergillus niger sps. (Novo) | 100 |
| Mucor sps. (International) | 100 |
| Candida cylindracea (sigma) | 100 |
| Pseudomonas aeruginosa (Genencor) | 100 |
| Calf Lipase (Miles) | 0 |
| Calf Lipase (Chr. Hansen's) | 0 |
| Lamb Lipase (Chr. Hansen's) | 0 |

* The Genecor microbial lipase material is disclosed in European Patent Application 85304126.7.

Table 1 shows clearly that known microbial lipases are soluble, and that only the Genencor microbial lipase is insoluble along with the animal lipases.

Assaying Lipase Activity

For this disclosure, all lipolytic activity was measured in the following manner. If curds, rather than liquids were being used, weighed samples were first homogenized with tributyrin substrate. Potentiometric titration is performed so as to determine lipase forestomach units (LFUs). One LFU equals the activity that releases $1.5\mu$ mol of butryric acid per minutes, Food Chemical Codex 3rd, Ed., National Academic Press, 1981.

The titration substrate is prepared by dispersing an amount of sodium caseinate equivalent to 600 mg of casein, in 95 ml of water contained in a 0.284 ℓ (one-half pint) freezer jar that fits the head of a suitable high-speed blender. This is mixed with 0.5 gm of hydroxylated lecithin. Finally, 5.0 ml of Tri-n-butyrin is added and mixed for 60 seconds at low speed. This substrate must be held to 33°C and used within 4 hours.

The sample is prepared by suspending or dissolving an accurately weighed amount of enzyme in water.

To measure, the titrator is filled with 0.05 N sodium hydroxide, and the instrument is calibrated following the manufacturer's instructions. The substrate is mixed for about 15 seconds with a magnetic stirrer, then 20.0 ml is pipetted into the reaction vessel of the titrator. One ml of the sample is added and equilibrated for 15 minutes. The rate at which the titrant was delivered during the titration, is determined and recorded as R in ml per min. The activity of the enzyme is calculated by the formula:

$$LFU/g = R \times 0.25 \times 10^3/(W \times 1.25),$$

wherein W is the weight, in g, of the enzyme preparation contained in the 1.0 ml of Sample taken for analysis.

Several of the enzymes from Table 1 were selected and futher investigated for use in small scale cheese making to observe the relationship between solubility and the partitioning between curds and whey.

Small Scale Cheese Making

To make cheese on a small scale, calcium chloride was added (dihydrate 1.47 g/L) to homogenized/pasteurized milk to assist curd formation. The milk was warmed to 31.5°C (89 deg. F)in a constant temperature bath and glucono-delta-lactone (2.3 g/L) added for PH control. Various lipases were added at equivalent activity levels based upon tributyrin activity to aliquots of the warmed milk. Fifteen minutes after addition of the glucono-delta-lactone, the milk was set with calf rennet (Chr. Hansen's rennet: 0.144g/l) and, after mixing, allowed to incubate undisturbed for approximately 25 minutes until curd of the desired body was formed. The curd was uniformly cut and returned to the bath. Incubation temperature was raised to 37.5°C (100 deg. F) within 22 minutes and held for a further 38 minutes to facilitate whey expression. Whey was drained and filtered through filter paper. Curds and whey were assayed for lipase

4

activity.

The data in Table 2 show that total enzyme recovery was typically high. Some loses compared to initial acitivites could be attributed to enzyme inactivation during the cheese making process while others were due to physical losses.

TABLE 2

| Partitioning of Added Enzyme During Small Scale Cheese Making | | | |
|---|---|---|---|
| SOURCE | % Enzyme Recovered | % of Total In Curd | % of Total In Whey |
| A. oryzae (Genencor) *1* | 91 | 94 | 6 |
| A. oryzae (Genencor) *2* | 90 | 89 | 11 |
| A. niger (Novo) | 98 | 16 | 84 |
| A. niger (Novo) *3* | 78 | 18 | 82 |
| Mucor sps. (International) | 75 | Ø | 100 |
| P. aeruginosa (Genencor) | 53 | 54 | 46 |
| P. aeruginosa (Genencor)*4* | 76 | 75 | 25 |
| Calf lipase (Chr. Hansen's) | 100 | 53 | 47 |
| Lamp lipase (Chr. Hansen's) | 100 | 86 | 14 |

*1* Average of 2 runs
*2* Enzyme added at twice the concentration of the previous sample.
*3* Enzyme added at three times the concentration of the previous enzyme.
*4* Enzyme precipitated with zinc sulfate to form slowly soluble complex.

The correlation between solubility (Table 1) and the partitioning of enzyme into the curd fraction (Table 2) was exceedingly high. The insoluble Genencor microbial lipase partioned 94% into the curd. Doubling the amount of added enzyme had little effect on the partitioning. In contrast, the soluble lipase derived from Aspergillus (A.) niger partitioned 20% in the curd. Because the cords represented, approximately 20% of the total weight of the milk, and as 20% of the initial activity was found in the curds, this indicates that the enzyme was evenly distributed between the cords and whey. Tripling the enzyme level had no effect on this partitioning phenomenon.

The soluble Mucor enzyme appeared to have no affinity for the curd as no enzyme could be detected in the curd fraction. However, the loss of approximately 25% of the initial enzyme addition suggests that the partitioning was similar to that for A. niger but the enzyme retained by the curd either had lost activity or was unmeasurable due to a masking phenomenon.

The partitioning of the enzyme from Pseudomonas (P.) aeruginosa is most relevant to the exogeneous enzyme complex concept. Only 53% of the initial activity of the soluble form was recoverable, with approximately half of the remaining activity measurable in each of the two fractions. Yet, when this same enzyme was complexed with a zinc salt, into an exogenous complex having a particle size equal to or greater than 0.2 microns, approximately 75% of the activity was concentrated in the curd.

Animal lipases in these instances behaved somewhat differently. Only 53% of the calf lipase activity was found in the cords as compared to 86% with the lamb lipase. Although these enzymes were initially insoluble when added to water, the calf lipase tended to solubilize during the cheese making process, unlike either the lamb lipase or the Genencor microbial lipase.

Bulk Cheese Making

Bulk milk was obtained from the University of Kentucky dairy farm, transported to the dairy lab, batch pasteurized at 63 deg. C for 30 minutes, cooled to 2 deg. C and held in a refrigerated vat until the following day. Then, the milk was heated to 31.1 deg. C, transferred to 365 kg capacity vats and manufactured into Colby cheese following Wister's procedure (1977) using Chr. Hansen's CH6Ø culture. Freeze-dried culture was seeded into skim milk and serially transferred to 22 kg of whole milk to form a bulk starter that was held overnight at 21 deg. C. Four kilograms (kg) of bulk starter were added to each vat containing 365 kg of milk.

Salt was preweighed at an amount equal to 2% of the curd weight and mixed thoroughly with 10.9 kg of curd which was then hooped, and pressed to yield 9 kg blocks of Colby cheese. Duplicate blocks of cheese were prepared for each treatment and manufacturing period, with the experiment being replicated two times.

Partitioning of Enzymes During Bulk Cheese Production

A comparison was made between the partitioning of soluble and insoluble enzymes during bulk cheese production. The aforementioned cheese making method was scaled to 7 kg of milk for enzymatic partitioning studies. Cheeses were evaluated organoleptically by conventional techniques such as acid degree value (ADV), free fatty acid (FFA) analysis, and non-protein nitrogen (NPN) analysis in order to determine optimum enzyme addition levels for production scale cheese manufacturing. This optimum was determined and found to correspond to an enzyme addition level of 1 TBU per Kg of cheese. This dose level was arbitrarily given the designation "1X". For experimental purposes, other doses were assigned values relative to this optimum dose (i.e. 10X, 100X, etc.). Similarly, a "1X" dose of protease was established and this corresponds to the addition of 6.5 mg Genencor Rhozyme P11® per kg cheese.

To assay protease activity, casein was iodinated with $I_{125}$ and diluted with unlabelled casein. Protease containing samples were incubated with this substrate under defined conditions, and the reactions terminated by the addition of trichloroacetic acid. Soluble radioactive counts were detected and measured in a gamma counter. A standard curve with dilutions of known activity was run for comparison.

Genencor A. oryzae fungal lipase was added to the milk before renneting at 1X, 10X, and 100X concentrations. Analysis showed that the insoluble lipase did not partition into the whey in any detectable level and appeared to remain totally entrained in the curd. Insoluble Genencor Rhoyme P11® fungal protease, partioned evenly between the whey and the curd at all levels tested (1X, 10X, 100X, 1000X). Approximately, 90 percent of the soluble protease ended up in the whey in all cases.

**Claims**

1.   A process for improving the amount of protease or lipase which is entrained into cheese curds from milk comprising:-
   (a) selecting insoluble particles having a size of at least 0.20 $\mu$m; said particles consisting essentially of a protease or lipase enzyme from a microbial source;
   (b) adding to milk an amount of the selected protease or lipase particles sufficient to achieve the desired entrainment of the particles in the cheese curds; and
   (c) forming the curds and whey from the milk of step (b).

2.   A process as claimed in claim 1 characterized in that it includes the further step of separating the curds from the curds and whey and making cheese therefrom.

3.   A process as claimed in claim 1 or claim 2 characterized in that the microbial source from which the enzyme is selected is an Aspergillus oryzae having a particle size of at least 0.20 $\mu$m (microns).

**Revendications**

1.   Procédé pour perfectionner la quantité de protéase ou de lipase qui est entraînée dans les caillés de fromage de lait, comprenant les étapes consistant à :
   (a) sélectionner des particules insolubles ayant une dimension d'au moins 0,20 micron, ces particules consistant essentiellement en une enzyme de protéase ou de lipase de source microbienne ;
   (b) ajouter au lait une quantité des particules de protéase ou de lipase sélectionnées suffisante pour obtenir l'entraînement souhaité des particules dans les caillés de fromage ; et
   (c) former les caillés et le lactosérum à partir du lait de l'étape (b).

2.   Procédé selon la revendication 1, caractérisé en ce qu'il comprend l'étape supplémentaire consistant à séparer les caillés des caillés et du lactosérum et de réaliser le fromage à partir de ceux-ci.

3.   Procédé selon la revendication 1 ou la revendication 2, caractérisé en ce que la source microbienne à partir de laquelle on choisit l'enzyme est l'Aspergillus oryzae ayant une dimension particulaire d'au moins 0,20 micron.

**Patentansprüche**

1. Verfahren zur Verbesserung der Menge an Protease oder Lipase, die in Käsebruch aus Milch überführt wird, dadurch **gekennzeichnet,** daß man

   (a) unlösliche Teilchen mit einer Größe von mindestens 0,20 $\mu$m auswählt, wobei die Teilchen im wesentlichen aus einem Protease- oder Lipase-Enzym aus einer mikrobiellen Quelle bestehen;

   (b) zu der Milch eine Menge der ausgewählten Protease- oder Lipaseteilchen zusetzt, die ausreichend ist, die gewünschte Überführung der Teilchen in den Käsebruch zu erzielen; und

   (c) den Bruch und die Molke aus der Milch nach Stufe (b) bildet.

2. Verfahren nach Anspruch 1, dadurch **gekennzeichnet,** daß man weiterhin den Bruch von dem Bruch und der Molke trennt und daraus Käse herstellt.

3. Verfahren nach Anspruch 1 oder 2, dadurch **gekennzeichnet,** daß die mikrobielle Quelle, aus welcher das Enzym ausgewählt wird, ein Aspergillus oryzae mit einer Teilchengröße von mindestens 0,20 $\mu$m ist.

7